# EUROPEAN PATENT APPLICATION

(11) **EP 1 227 267 A2**
(43) Date of publication of application: **31.07.2002**
(21) Application number: 01830416.2
(22) Date of filing: 21.06.2001
(51) Int. Cl.: F16H 61/00, F16H 55/56

(54) **An expandable pulley, for instance for continuously variable transmissions**

(30) Priority: 26.01.2001 IT TO010066
(71) Applicant: ADLER S.p.A., 38068 Rovereto (Trento) (IT)
(72) Inventor: Morone, Alfio Ersilio, 20129 Milano (IT)
(74) Representative: Bosotti, Luciano

(57) **Abstract**

The pulley comprises one first half-pulley (201) and one second half-pulley (202), which can rotate about a common axis (2) and perform a relative axial movement along said common axis of rotation. One (201) of the half-pulleys carries associated to it at least one cam (208) mounted on a supporting element (203b), which extends in a plane (X203) orthogonal to the common axis of rotation and which is able to co-operate with at least one tooth (207) of a frontal toothing carried by the other (201) half-pulley. The cam (208) has a cam surface with at least one portion in an area corresponding to the plane of extension (X203) of the aforesaid supporting element (203b).

## Description

The present invention relates to a pulley according to the preamble of Claim 1.

A pulley of this type is known, for example, from the patent application for industrial invention No. MI99A001958, in the name of the same applicant, included in the state of the art in conformance with Article 14.3 of the Patent Law.

In particular, the above prior application describes a continuously variable transmission (CVT), the driven pulley of which comprises a mobile half-pulley to the hub of which is associated a frontal toothing designed for engagement with corresponding axial projections that are integral with an element connected in rotation to the fixed half-pulley.

In the specific exemplary of embodiment illustrated, the teeth of the aforesaid frontal toothing function as follower elements in regard to the above-mentioned projections, which are designed to function as cams. These projections are formed by a core consisting of a lamina coated with wear-resistant plastic material, which enables distribution of the effect of wear of the profile over the entire surface of contact with the tooth functioning as cam follower, which is made of metal material.

Preferably, the cams have a convex surface, with an inclination that varies with respect to the axis of rotation of the pulley so as to determine a variation in the axial force generated according to the point of contact with the respective tooth.

Tests conducted by the Applicant have shown that the above prior solution, albeit altogether satisfactory from the functional standpoint, may be further improved upon as regards the characteristics of wear resistance of the various parts involved.

The purpose of the present invention is to achieve the above overall improvement also as regards the prevalent conditions of use. In the typical use as driven pulley of a continuously variable transmission, the pulley is in fact designed to operate most of the time in conditions such that the point of contact between each cam and the corresponding cam follower is close to the element designed to carry the cams. This is usually the plate of a friction clutch of a centrifugal type associated to the pulley, or a member (so-called "cup") associated to said plate.

In pulleys of the type specified above, it is customary to adopt the solution of inserting, between the tubular sleeve, along which movement of the mobile half-pulley takes place, and the hub of the same half-pulley, an element likewise having a tubular shape consisting of a plastic material with self-lubricating characteristics (typically polyamide and/or polytetrafluoroethylene). In this way it is possible to avoid, and virtually eliminate, recourse to fluid and/or viscous lubricating substances, thus achieving a so-called "dry" lubrication.

The specific working conditions of the pulley mean, however, that the aforesaid element made of self-lubricating material is subject to greater wear at its ends, thus causing the axial orifice of the sleeve to end up having a minimum diameter in its median portion and a gradually increasing diameter in the direction of the ends of the sleeve itself.

This fact, which is likely to bring about conditions of relative displacement of the parts between which the sleeve is set, can basically be put down to the particular conditions of stress of the pulley. Elimination of this phenomenon, which is likely to cause vibration and noise and, at least in some cases, to hinder free movement of the half-pulley, constitutes another purpose of the present invention.

According to the present invention, the above purposes are achieved by a pulley having the additional characteristics referred to specifically in the ensuing claims.

The invention will now be described, purely by way of non-limiting example, with reference to the annexed drawings, in which:
- Figure **1** is an overall view, in a diametral cross section, of a pulley made according to the invention;
- Figures **2** and **3** basically correspond to two sectional views according to the plane indicated by II-II of Figure 1, where Figures 2 and 3 refer to two different possible operating conditions of the pulley of Figure 1; and
- Figure **4** illustrates, at an enlarged scale, one of the elements present in Figure 1, represented by itself for greater clarity of illustration.

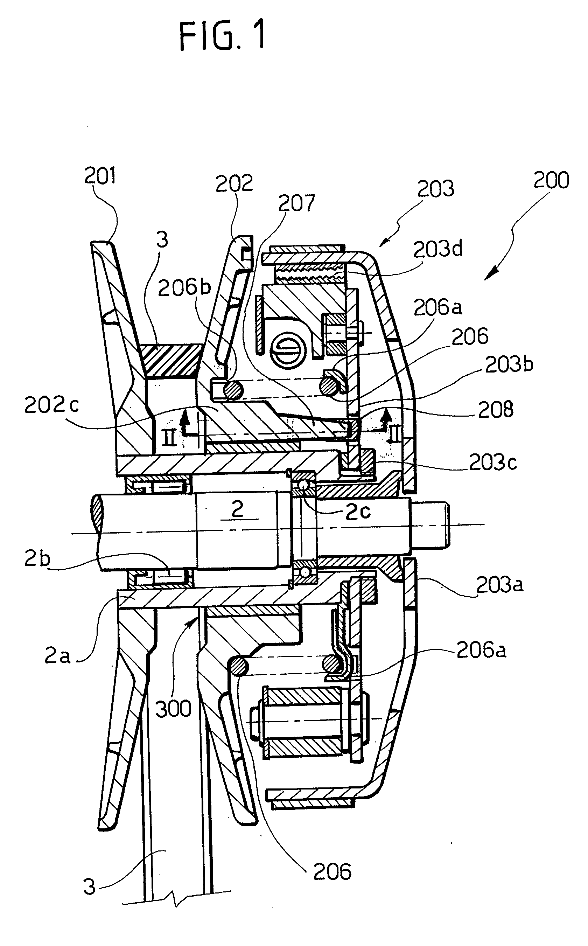

In Figure 1, the reference number 200 designates, as a whole, a pulley which, according to a preferred application of the invention, can form the driven pulley of a continuously variable transmission (CVT).

In particular, the above-mentioned continuously variable transmission (of a type generally known and for this reason not illustrated as a whole) comprises a drive pulley which draws along in rotation the driven pulley 200 by means of a drive belt 3.

Both the general criteria of operation of the aforesaid continuously variable transmission and the details of implementation of the drive pulley are to be deemed altogether known in the prior art and hence not such as to require a detailed description herein, also because in themselves they are not of importance for the purposes of implementation and understanding of the present invention.

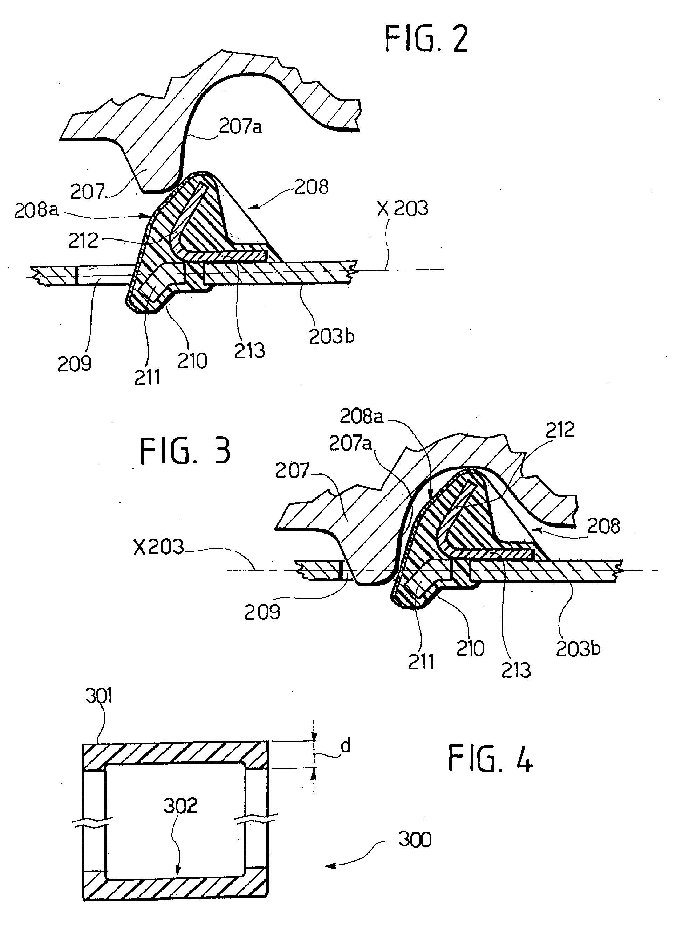

The driven pulley 200 is basically made up of :
- a fixed half-pulley 201, which is integral (for example, made of a single piece) with a sleeve or bushing 2a mounted, by means of bearings 2b, 2c on the driven shaft 2 of the variable speed drive, and
- a mobile half-pulley 202 capable of sliding axially on the sleeve 2a, hence with respect to the fixed half-pulley 201, preferably with the interposition of an element 300, the characteristics of which can be inferred better from Figure 4.

In the examplary of embodiment illustrated herein - which is purely a non-limiting example - the pulley 200 is thus able to rotate freely with respect to the driven shaft 2.

On the free end of the shaft 2 there is also mounted the bell 203a of a friction clutch 203 comprising a plate 203b connected to the sleeve 2a by means of fastening elements 203c. In a known way, the plate 203b is able to engage with the bell 203a by means of centrifugal weights 203d, which have associated to them respective friction surfaces.

On its internal surface, which faces the half-pulleys 201 and 202, the plate 203b (which is integral with the sleeve 2a and hence with the half-pulley 201) carries an annular bead 206a for containing one end of a spring 206 that is coaxial to the shaft 2. The other end of the spring is inserted in a corresponding seat 206b of the mobile half-pulley 202. The aforesaid bead 206a may possibly consist of a peripheral wall or shell of an element having a general cup-like conformation (the so-called "cup") associated to the internal surface of the plate 203b.

The hub part 202c of the mobile half-pulley 202 has frontal teeth 207 projecting towards the plate 203b and having a front profile 207a (in the direction of rotation) appropriately shaped according to a curvilinear surface, as may be more clearly seen in Figures 2 and 3.

The teeth 207 are designed to co-operate as cam followers with corresponding projections 208 arranged in a fixed position with respect to the plate 203b of the clutch 203. The projections 208, which function as cams, can be formed on the plate 203b (according to criteria better illustrated in what follows with reference to Figures 2 and 3), or else be at least in part supported (according to an alternative embodiment not explicitly illustrated in the drawings but the characteristics of which are evident for a person skilled in the branch) by the cup element that defines the bead 206a for containing the spring 206.

The projections 208 (referred to in what follows simply as "cams") have a frontal surface 208a designed to co-operate with the teeth 207 in a typical relationship of co-operation between cam and cam follower in a situation where the teeth 207 co-operate with the various regions of the development of the surface 208a.

The surfaces 208 may be plane, or else, as in the example of embodiment illustrated in the attached drawings (which - it is recalled - is only one example of a possible embodiment of the invention), have a convex pattern, possibly with a variable radius of curvature so as to present at least one first portion and one second portion each having in general a different angle of inclination with respect to the direction of the axis of rotation of the pulley 200; in Figures 2 and 3 this direction is in effect vertical. In this connection, useful reference may be made to the previous patent application cited in the introductory part of the present description.

The profiles 207a, 208a of the teeth 207 and of the cams 208, respectively, are preferably of a conjugate type to ensure contact throughout the width of the tooth whatever the relative position in the axial direction of the teeth 207 of the cams 208.

In the application, which is preferred but not imperative, to a continuously variable transmission (usable, for example, in vehicles, such as scooters, small four-wheeled vehicles, golf carts, snowmobiles, etc.), the pulley 200 is designed to operate in a wide range of different possible operating conditions, which correspond both to variations in speed of rotation and to variations in transmitted torque.

Conditions of rotation at a low speed arise, for instance, when the vehicle on which the variable-speed drive is mounted starts from a standstill. The speed of the drive pulley is low, and the corresponding race remains wide. In the driven pulley 200, the spring 206 exerts its load on the mobile half-pulley 202, which is pushed against the half-pulley 201, forcing the belt 3 to set itself in a more external radial position.

In this operating condition (not specifically illustrated in Figure 1), the position of the teeth 207 with respect to the cams 208 is the one represented in Figure 2, i.e., with the teeth 207 that are located, within their possible range of interaction with the surface 208a of the cams 208, in the area furthest away from the plate 203b of the friction clutch 203.

As the speed increases, the race of the drive pulley is restricted, so that the,belt 3 tends to move away radially towards the outside of the drive pulley, drawing the part wound on the drive pulley 200 towards the axis of rotation of the pulley itself, identified by the shaft 2. The mobile half-pulley 202 is thus forced to move away axially from the half-pulley 201 against the action of thrust of the spring 206.

In this way, the position of operation referred to in Figures 1 and 3 is reached, corresponding to the displacement of the teeth 207 along the surfaces 208a of the cams 208 in the direction of approach to the plate 203b of the friction clutch.

In general, the first operating condition illustrated (Figure 2) corresponds to a situation in which the co-operation of the teeth 207 and of the cams 208 generates a high axial thrust which, being added to that of the spring 206, tends to force the mobile half-pulley 202 against the fixed half-pulley 201 in optimal conditions for achieving transmission of the high torque induced by the reduced drive ratio of the continuously variable transmission.

What has been described briefly above corresponds to criteria and modalities of operation that are to be deemed known, for example from the prior Italian patent application referred to more than once previously.

In the solution according to the invention, the cams 208, and in particular the frontal surface 208a, which defines the cam path proper, are made so as to extend, at least in part, in an area corresponding to the general plane of extension X203 of the plate 203b.

As may be appreciated directly from Figures 2 and 3, this solution enables each cam 208 to be set in a far more centred or "centroidal" position with respect to the plate 203b.

In particular, by providing for this purpose in the plate 203b corresponding openings designated by the reference number 209, it is possible to cause - once the operating condition of Figure 3 is reached, which corresponds to the maximum value of the drive ratio of the continuously variable transmission - the ends of the teeth 207, and in particular the region having a restricted surface designed to co-operate with the surface 208a of the cam, to come practically to "penetrate" the plate 203b so as to be able to co-operate with the surface 208a in a region practically lying in the plane X203, the foregoing in conditions whereby the material constituting the cam 208, and in particular the coating or insert made of wear-resistant plastic material, which usually defines the surface 208a, is subjected practically only to compressive stress.

In any case, even in the conditions of minimum drive ratio (Figure 2), the solution according to the invention enables a reduction in the stresses exerted upon the cam 208. Given the same extension of the surface 208a, the area of contact with the tooth 207 represented in Figure 2 is, in fact, much closer to the plane X203 than occurs in the same operating conditions with the solutions according to the prior art cited in the introductory part of the present description.

The foregoing results in a beneficial effect on the wear resistance of the cam 208 as a whole, and above all the wear of the wear-resistant material that defines the surface 208a.

From the implementation point of view, a solution that has proved particularly advantageous is that of making the cam 208 using a plastic material 210 (possibly containing fillers, reinforcing materials, etc.) moulded (i.e., over-moulded) on a metal core presenting a general T profile with two branches projecting on either side of the general plane X203 in which the plate 203b extends. This is done preferably by providing, in an area corresponding to the surface 208a, a further layer of material having high characteristics of wear resistance. Alternatively, the entire cam 208 may be made of such a material.

In the example of embodiment illustrated, a first branch 211 of the aforesaid T-shaped core, which is designed to define the ends of the cam 208 which is opposite to the teeth 207, simply consists of a folded-back part of the plate 203b. The said folded-back part may be conveniently formed by a press operation, such as stamping and blanking, in a simultaneous or practically simultaneous way with the forming of the opening 209 referred to previously. In this way, the folded-back part in question identifies or defines one of the sides of the opening 209 itself.

The other branch of the T conformation, which is designed to extend in the direction of the teeth 207, is constituted, for example, by one of the branches 212 of a V-shaped element made of metal material, the other branch of which, designated by 213, is fixed to the core surface of the plate 203b, for example by welding.

Even though the embodiment illustrated represents the embodiment of the invention that is currently preferred, different solutions are even so possible, which maintain the same functionality, for example the solution of making at least one of the branches 211, 212 (typically, the branch 212) as part of the same cup-like element defining the bead 206a designed to contain the spring 206.

Whatever the specific choice of embodiment adopted, the solution according to the invention offers the additional advantage of minimizing the amount of material 210 that is to be applied (typically, over-moulded) on the supporting structure defined by the branches 211 and 212. In addition to being advantageous in terms of economy of material used, this solution proves advantageous also as regards the possibility of ensuring a firm anchorage (at the level of single piece) of the coating with the structure supporting it.

The solution according to the invention preserves the advantage provided by the possibility of adapting the pulley 200 (and hence the continuously variable transmission of which it forms part) also to engines with very different powers, by simple replacement of the part (plate 203b or cup element defining the bead 206a) which carries the cams 208, consequently without any need to replace the entire driven pulley.

There is moreover preserved the advantage linked to the fact of being able to make the main components of the pulley using light-alloy or aluminium castings and moulding of plastic material, which affords a consequent saving in costs.

Set between the sleeve 2a connected to the fixed half-pulley 201 and the hub 202c of the mobile half-pulley 202 (and usually interference-fitted inside the hub 202c) is the tubular element 300 consisting of a plastic material of the so-called self-lubricating type, or else of a metal material provided with a layer of coating consisting of such a self-lubricating material. The plastic material may be polyamide and/or polytetrafluoroethylene (PTFE), which can enable and facilitate relative movement (which occurs primarily in the direction of the shaft 2) of the half-pulleys 201, 202, so giving rise to a lubrication scheme of the type commonly referred to as "dry". In practice, the element 300 slides on the sleeve 2a, following the half-pulley 202.

In the solution here illustrated, the sleeve-like body 300, albeit having a general tubular configuration, does not have a constant wall thickness throughout its axial development.

More precisely, and as may be seen more clearly in Fig. 4, where the element 300 is represented alone (with the relative proportions between the parts deliberately altered for reasons of clarity of illustration), the element 300 itself has two end parts 301 having an overall annular development. The parts 301 have a thickness d (measured in the diametral direction with respect to the overall development of the element 300) which is greater than the homologous dimension of the intermediate area of the element 300. In other words, the axial orifice of the element 300 has a larger diameter in the intermediate area as compared to the end area 301.

In the embodiment here illustrated by way of example, this result is obtained maintaining substantially constant the external diameter of the element 300 and providing, in an area corresponding to the intermediate portion of the element 300, a cylindrical portion 302 with material removed as compared to the end parts 301, either one or both of said end parts 301 being located in a marginal position with respect to the element 300.

The above solution can be implemented, for example, by making the element 300 by means of a press operation, this applying both where the element 300 is made in the form of a single piece and in the case where it is made in the form of a number of segments that are to be fitted together so as to form a tubular element. For example, it may consist of two (or more) tile-like elements, each having for example an angular extension of 180° (or a corresponding extension). In any case, the stresses acting on the lubricating element 300 and induced by the action of the belt 3 (which tends to cause the half-pulleys 201 and 202 to divaricate in the sense of inducing misalignment of the corresponding axes of rotation) tend to be exerted principally on the thickened end areas 301, so preventing the problems referred to in the introductory part of the description from arising.

Of course, without prejudice to the principle of the invention, the details of construction and the embodiments may be varied widely with respect to what is described and illustrated herein, without thereby departing from the scope of the present invention.

This applies in particular, but not exclusively, to:
- the possible absence of the friction clutch 203; in this case, the role of the plate 203b (and/or of the element referred to as "cup" designed to define the radial bead 206a) can be performed simply by a plane element which can be integral in rotation with the driven shaft 2;
- the possible reversal of the relative positioning of the teeth 207 and of the cams 208 in a situation in which the teeth 207 may be integral in rotation (either directly or through the intervention of the friction clutch 203) with the fixed half-pulley 201, whilst the cams 208 are carried by a plane element connected to the mobile half-pulley 202; and
- the possible location of the thickened portions 301 of the element 300 in a position which, albeit continuing to be an end position, is not a marginal position, for example on account of the presence of an edge on the external side of either one of the portions 301.

## Claims

1. A pulley comprising a first half-pulley (201) and a second half-pulley (202), which can rotate about a common axis (2) and perform a relative axial movement along said common axis of rotation, **characterized in that**:
- one (201) of said half-pulleys carries associated to it at least one cam (208) mounted on a supporting element (203b) which extends in a plane (X203) orthogonal to said common axis of rotation; said at least one cam (208) having a cam surface (208a) which is able to co-operate with at least one tooth (207) of a frontal toothing carried by the other (202) of said half-pulleys, and
- said cam surface (208a) has at least one portion in an area corresponding to said plane of extension (X203) of said supporting element (203b)

2. The pulley according to Claim 1, **characterized in that** said supporting element (203b) has, in an area corresponding to said at least one portion of said cam surface (208a), an opening (209) that can enable penetration of said at least one tooth (207) when said tooth (207) co-operates with said at least one portion of said cam surface (208a).

3. The pulley according to Claim 1 or Claim 2, **characterized in that** said cam surface (208a) has areas with inclinations respectively greater and smaller with respect to said common axis of rotation and **in that** said portion extending in an area corresponding to said plane (X203) corresponds to an area of smaller inclination with respect to the axis of rotation.

4. The pulley according to any of Claims 1 to 3, **characterized in that** said at least one cam (208) comprises a core part (211, 212) on which there is applied, at least in an area corresponding to said cam surface (208a), a coating (210) of low-friction material, preferably plastic material.

5. The pulley according to Claim 1 or Claim 4, **characterized in that** said at least one cam (208) comprises a part of core (211, 212) on which a coating of plastic material (210) is applied which carries, in an area corresponding to said cam surface (208a), a layer of material with high characteristics of wear resistance.

6. The pulley according to Claim 4 or Claim 5, **characterized in that** said part of core has branches (211, 212) extending on both sides with respect to said plane of extension (X203) of said supporting element.

7. The pulley according to Claim 6, **characterized in that** at least one of said branches (210) is made of a single piece with said supporting element (203b).

8. The pulley according to Claim 7, **characterized in that** said at least one branch (211) is defined by a folded-back part of said supporting element (203b).

9. The pulley according to Claim 2 and Claim 8, **characterized in that** said folded-back part defining said at least one branch (211) defines one of the sides of said opening (209).

10. The pulley according to any one of Claims 5 to 9, **characterized in that** at least one (212) of said branches is constituted by an element applied on said supporting element (203b).

11. The pulley according to any one of Claims 5 to 10, **characterized in that** said part of core is constituted, at least in part (212), by a portion of a containment element (206) associated to said supporting element (203) so that it performs a function of containment of a spring (206) that can bring about the relative movement of approach between said half-pulleys (201, 202).

12. The pulley according to any one of Claims 5 to 11, **characterized in that** said part of core is made of metal material.

13. The pulley according to any one of the preceding claims, **characterized in that** it further comprises a friction clutch (203) of a centrifugal type, which is able to establish a relationship of driving in rotation between one (202) of said half-pulleys and a driven shaft (2) defining said axis of rotation and **in that** said supporting element (203b) defines or is associated to the plate of said friction clutch (203).

14. A pulley comprising a first half-pulley (201) and a second half-pulley (202) which are able to rotate about a common axis (2) and to perform a relative axial movement along said common axis of rotation, **characterized in that**:
- said first half-pulley (201) and said second half-pulley (202) carry associated to them respective tubular elements (2a, 202c) between which is set a sleevelike element (300) with a self-lubricating function, and
- said sleevelike element (300) has end portions (301) having a thickness (d) greater than the thickness of the remaining parts of the sleevelike element (300) itself.

15. The pulley according to Claim 14, **characterized in that** at least one of said end portions (301) is located in a marginal position with respect to said sleevelike element (300).

16. The pulley according to Claim 14 or Claim 15, **characterized in that** said sleevelike element (300) has a substantially constant external diameter, said end portions (301) being defined by a variation of the diameter of the internal orifice of the sleevelike element (300) itself.

17. The pulley according to any one of Claims 14 to 16, **characterized in that** said sleevelike element (300) is made of plastic material.

18. The pulley according to any one of Claims 14 to 16, **characterized in that** said sleevelike element (300) is made of metal material coated with plastic material.

19. The pulley basically as described and illustrated and for the purposes specified herein.
